# EUROPEAN PATENT SPECIFICATION

(11) **EP 1 117 515 B1**
(45) Date of publication and mention of the grant of the patent: **24.11.2004**
(21) Application number: 99941846.0
(22) Date of filing: 03.09.1999
(51) Int. Cl.: B28D 1/12

(54) **DIAMOND BLADE HAVING SEGMENT TYPE CUTTING TIP FOR USE IN CUTTING, GRINDING OR DRILLING APPARATUS**
DIAMANTIERTES BLATT MIT SCHNEIDSEGMENTEN ZUR VERWENDUNG IN SCHNEID-, SCHLEIF- ODER BOHRVORRICHTUNGEN
LAME DE DIAMANT A POINTES DE COUPE DU TYPE SEGMENT, UTILISEE DANS UN APPAREIL DE COUPE, DE MEULAGE OU DE PERCAGE

(30) Priority: 03.09.1998 KR 9836323
(43) Date of publication of application: 25.07.2001
(73) Proprietor: EHWA DIAMOND IND. CO., LTD., Kyongki-Do 447-060 (KR); General Tool Inc., Irvine, CA 92606 (US)
(72) Inventor: KIM, Sookwang, Irvine, CA 92612 (US); YOON, Soyoung, Yongsan-Gu, Seoul 140-030 (KR); LEE, Changhyun, Pyongtaek-Si, Kyongki-Do 459-010 (KR)
(74) Representative: Bloch, Gérard
(86) International application number: PCT/KR1999/000515
(87) International publication number: WO 2000/013869

(56) References cited:
- DE-A- 2 213 811
- DE-A- 2 318 378
- DE-A1- 2 438 601
- GB-A- 1 010 318
- US-A- 4 291 667

## Description

The present invention relates to a diamond tool according to the preamble of claim 1 (see US 4 291 667) for use in apparatus such as cutting saw machine, grinding wheel machine, and core drilling machine respectively for cutting, grinding and drilling crushable materials such as brick, concrete, granite, marble, etc.

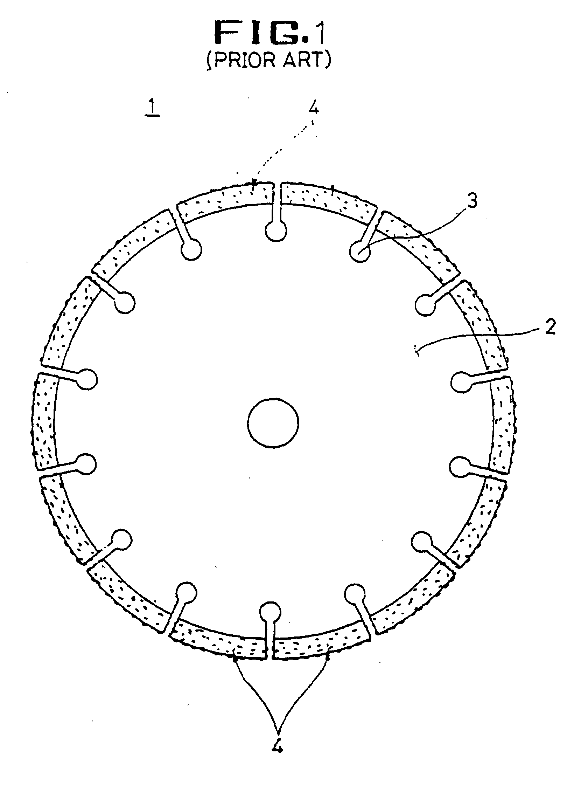

A conventional diamond tool or blade 1 for use in apparatus for cutting crushable materials such as cutting saw machine, as shown in FIG. 1 to 3, comprises steel wheel body 2 connected with a shaft of electric motor having a plurality of discharge slots 3 for receiving and discharging minute chips produced during cutting operation,and a plurality of cutting segments 4 disposed circumferentially on steel wheel body 2 between discharge slots 3.

Cutting segments 4 are fabricated by mixing particles of diamond and grinding materials, particles of metals composing of cobalt, nickel, bronze, copper, etc., and particle of resin or ceramic and forming a given shape out of the mixed particles by plastic working including press work.

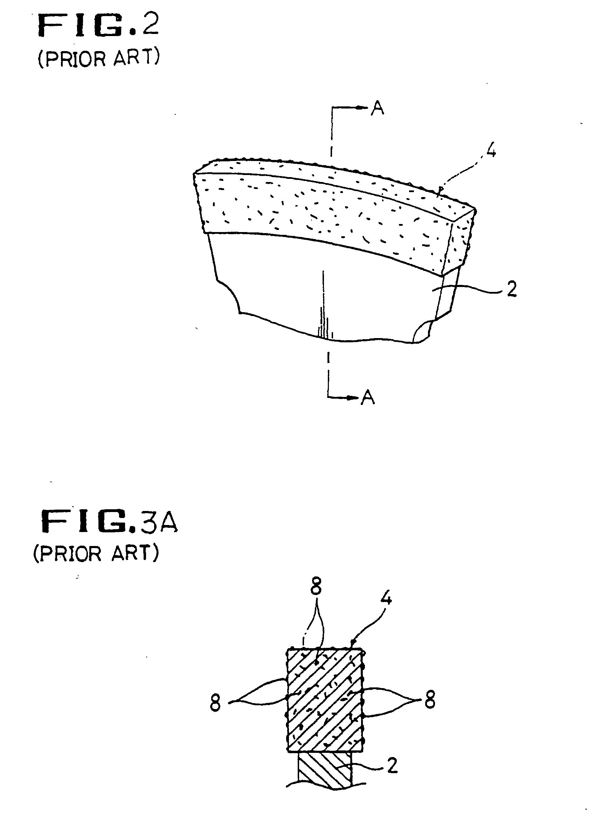

Thus, diamond particles 8 are randomly distributed in the inside and surfaces of cutting segment 4 as shown in FIG.3A.

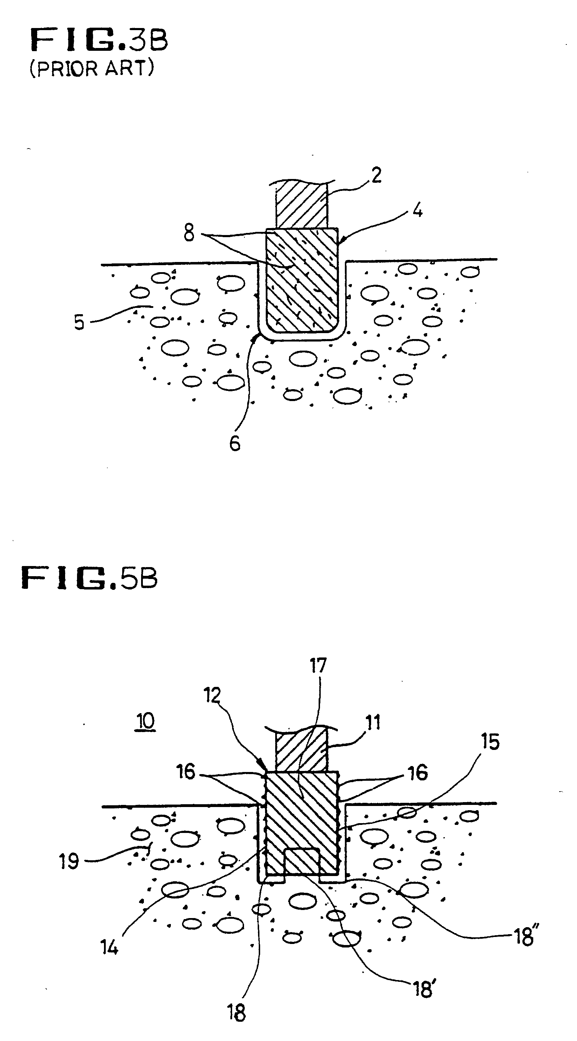

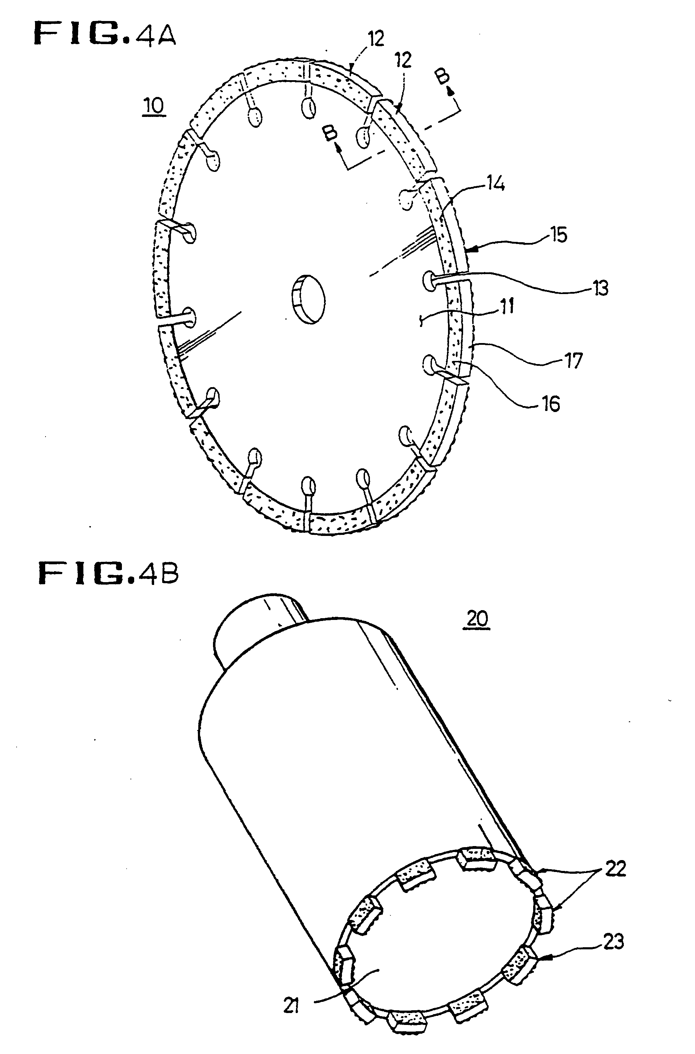

In this blade 1, upper surface of each cutting segment 4 contacts with corresponding surface portion of crushable materials 5 to be cut and grinds it to form cutting slot 6 in crushable materials 5 during cutting operation as shown in FIG.3B.

Minute chips produced by cutting operation of cutting segment 4 are gathered in cutting slot 6 and discharge slots 3 of steel wheel body 2 and discharged from there to outside when discharge slots 3 of steel wheel body 2 are moved from inside of cutting slot 6 to outside thereof by the rotation of steel wheel body 2.

By virtue of the above stated conventional blade 1, the cutting ability of apparatus for cutting, grinding or drilling crushable materials has been greatly enhanced by using of cutting segments 4 and discharge slot 3 to facilitate discharge of minute chips causing cutting segments 4 to increase defacement thereof.

However, since shape and material composition of upper surface of each cutting segment 4 are uniform on the whole, both edges of upper surface contacting with side wall and bottom of cutting slot 6 formed in crushable materials 5 during cutting operation are defaced faster than center thereof contacting only with bottom of cutting slot 6 of crushable materials 5.

Accordingly, the contacting area between upper surface of cutting segment 4 and crushable materials 5 to be cut is enlarged to increase resistance of crushable materials 5 and thereby induce poor cutting and decrease cutting ability and life of blade. Further, since size of chips produced during cutting operation is very minute, these chips are easy to remain in cutting slot 6 of crushable materials 5 to prevent upper surface of cutting segment 4 grinding bottom of cutting slot 6 and thereby decrease cutting ability.

Also, in case of that minute chips discharged from cutting slot 6 are dispersed in the air, it gave rise to the bad effects to user's health and the contamination of environment.

### SUMMARY OF THE INVENTION .

It is an object of the present invention to provide a diamond tool for use in apparatus such as cutting saw machine, grinding wheel machine, and core drilling machine, respectively for cutting, grinding and drilling crushable materials such as brick, concrete, granite, marble, etc., having segment type cutting tip comprising a plurality of diamond layer segments, each of which at least two diamond layers are longitudinally disposed along the rotation direction of the tool to form at least two microscopic cutting grooves in the crushable materials during cutting operation and thereby to cause portions of crushable materials between the cutting grooves to be easily crushed by non-diamond portions of the diamond layer segments to enhance cutting ability of the tool.

It is another object of the present invention to provide a diamond tool for use in apparatus such as cutting saw machine, grinding wheel machine, and core drilling machine, having a structure which segment type cutting tip is able to produce cutting chips with relative large size during cutting operation so that those chips are easily discharged outside with reducing the friction with segment type cutting tip of tool, thereby to increase cutting ability and to prevent the chips dispersing in the air and giving rise to the bad effects to user's health and the contamination of environment.

It is the other object of the present invention to provide a diamond tool for use in apparatus such as cutting saw machine, grinding wheel machine, and core drilling machine, having segment type cutting tip comprising a plurality of diamond layer segments, each of which diamond particles in diamond layer thereof are distributed in a given pattern to reduce the amount of diamond particles used and thereby reduce the manufacturing cost of tool.

To accomplish these objects, a diamond tool according to claim 1 is provided.

In this embodiment of the present invention, the segment type cutting tip further includes a plurality of non-diamond layersegments, each of which diamond particles are randomly distributed in inside and surfaces thereof, and the non-diamond layer segments and diamond layer segments are alternatively disposed each other on the circumference of wheel body.

Further, diamond particles in each diamond layer of diamond layer segments are distributed in a given pattern or arrangement such a single or double layer figure with grid shaped spots.

Also, in the non-diamond portion of each diamond layer segment, diamond particles can be distributed in the density lower than that of diamond layers of diamond layer segments or non-diamond layer segments.

In another embodiment of the present invention, a diamond tool for use in apparatus for cutting, grinding or drilling crushable materials comprises a wheel body connected with a shaft of electric motor, and segment type cutting tip for cutting, grinding or drilling crushable materials comprising a plurality of diamond layer segments disposed at predetermined intervals on the circumference of wheel body, each of diamond layer segments having non-diamond portion including a depressed portion disposed in the center of inner surface thereof and cutting portions disposed in both edges of outer surface thereof, and a plurality of diamond layers longitudinally disposed parallel with the rotation direction of the tool respectively on bottom surfaces of cutting portions of non-diamond portion and inner and outer surfaces of non-diamond portion of diamond layer segments divided or reduced by depressed portion and cutting portions thereof.

In this embodiment of the present invention, diamond layer segments are disposed on the circumference of wheel body so that depressed portion and cutting portions thereof are alternatively directed to the inside or outside.

Also,bottom surfaces of cutting portions of non-diamond portion are positioned in the plane forming the center between inner surface and outer surface of non-diamond portion of diamond layer segments to let diamond layers disposed thereon to form one cutting line during the cutting operation of tool.

In other embodiment of the present invention, a diamond tool for use in apparatus for cutting, grinding or drilling crushable materials comprises a wheel body connected with a shaft of electric motor, and segment type cutting tip for cutting, grinding or drilling crushable materials comprising a plurality of diamond layer segments disposed at predetermined intervals on the circumference of wheel body, each of diamond layer segments having non-diamond portion including at least one depressed portion disposed in inner or/and outer surface thereof, and a plurality of diamond layers longitudinally disposed parallel with the rotation direction of the tool respectively on bottom surface of depressed portion of non-diamond portion and inner or/and outer surface of non-diamond portion of diamond layer segments divided or/and not divided by depressed portion thereof.

In the embodiment of the present invention, diamond layer segments have four inner and outer depressed portions which are disposed to cross each other at predetermined intervals in inner and outer surfaces thereof.

It is desirable that the depth of all bottom surfaces of depressed portions of inner and outer surfaces of non-diamond portion is a half of the thickness of diamond layer segment to let diamond layers disposed thereon to form one linear cutting line during the cutting operation of tool.

However, the depth of bottom surfaces of depressed portions of each inner and outer surface of non-diamond portion can be less than a half of the thickness of non-diamond portion of diamond layer segment to let diamond layers disposed thereon to form at least two linear cutting lines during the cutting operation of tool.

### BRIEF DESCRIPTION OF THE DRAWINGS

The above objects and other advantages of the present invention will become more apparent by describing in detail preferred embodiments thereof with reference to the attached drawings in which:
FIG.1 is a front view of conventional diamond tool or blade for use in cutting saw machine in which diamond particles are randomly distributed in the inside and surfaces of cutting segment thereof;
FIG.2 is a partial perspective view of the diamond blade shown in FIG.1;
FIG.3A is a partial cross-sectional view of the diamond blade taken along line A-A of FIG.2;
FIG.3B is a partial cross-sectional view of the conventional diamond blade shown in FIG.1 to illustrate state which cutting segment thereof is operated;
FIG.4A and 4B are perspective views of diamond tools respectively for use in cutting saw machine and core drilling machine according to one preferred embodiment of the present invention, including a plurality of diamond layer segments, each of which two diamond layers are longitudinally disposed respectively in inner and outer surfaces of non-diamond portion of each diamond layer segment thereof along the rotation direction of the tool to form two microscopic linear cutting grooves in the crushable materials during cutting operation;
FIG.5A is a partial cross-sectional view of the diamond tool of the present invention taken along line B-B of FIG.4A;
FIG.5B is a partial cross-sectional view of the diamond tool of the present invention shown in FIG.4A or 4B to illustrate state which diamond layer segment thereof is operated;
FIG.6 is a partial cross-sectional view of a diamond tool of the present invention, which three diamond layers are longitudinally disposed respectively in and between inner and outer surfaces of non-diamond portions of each diamond layer segment thereof along the rotation direction of the tool to form three microscopic linear cutting grooves in the crushable materials during cutting operation;
FIG.7 is a partial cross-sectional view of a diamond tool of the present invention, which four diamond layers are longitudinally disposed respectively in and between inner and outer surfaces of non-diamond portions of each diamond layer segment thereof along the rotation direction of the tool to form four microscopic linear cutting grooves in the crushable materials during cutting operation;
FIG.8A and 8B are perspective views of diamond tools respectively for use in cutting saw machine and core drilling machine according to the present invention, including non-diamond layer segments alternatively disposed together with diamond layer segments on the circumference of wheel body;
FIG.9A and 9B are partial side and bottom views of diamond tools shown in FIG.8A and 8B;
FIG.10A and 10B are perspective views of diamond tools respectively for use in cutting saw machine and core drilling machine according to another preferred embodiment of the present invention, each of which a plurality of diamond layers are longitudinally disposed respectively on bottom surfaces of cutting portions of non-diamond portion and inner and outer surfaces of diamond layer segments;
FIG.11 is a partial perspective view of diamond tool shown in FIG.10A or 10B;
FIG.12A and 12B are partial side and bottom views of diamond tools shown in FIG.10A and 10B;
FIG.13 is a partial cross-sectional view of the diamond tool of the present invention overlapping cross-sections taken along lines C-C and D-D of FIG.10A to illustrate state which diamond layer segment thereof is operated;
FIG.14A and 14B are partial side and bottom views of diamond tools respectively for use in cutting saw machine and core drilling machine according to the other preferred embodiment of the present invention, which diamond layer segments have four inner and outer depressed portions disposed to cross each other at predetermined intervals in inner and outer surfaces thereof;
FIG.15 is a partial cross-sectional view of the diamond tool of the present invention overlapping cross-sections taken along lines E-E and F-F of FIG.14A to illustrate state which diamond layer segment thereof is operated;
FIG.16A and 16B are partial side and bottom views of diamond tools of the present invention, which the depth of bottom surfaces of depressed portions of each inner and outer surface of non-diamond portion is less than a half of the thickness of non-diamond portion of diamond layer segment;
FIG.17 is a partial cross-sectional view of the diamond tool of the present invention overlapping cross-sections taken along lines G-G and H-H of FIG.16A to illustrate state which diamond layer segment thereof is operated; and
FIG.18A, 18B and 18C are partial side views of the diamond tool for use in cutting saw machine of the present invention, which in non-diamond portion of each diamond layer segment shown in FIG.4A, 6 and 10A, diamond particles are distributed in the density lower than that of diamond layers of diamond layer segments or non-diamond layer segments.

### DETAILED DESCRIPTION OF THE PREFERRED EMBODIMENTS

In several embodiments of this invention described below with reference to the accompanying drawings, the invention is applied to cutting saw machine and core drilling machine.

Referring to FIG.4A and 4B, there are illustrated diamond tools 10 and 20 according to one preferred embodiment of the present invention for use in apparatus for cutting and drilling crushable materials such as cutting saw machine and core drilling machine.

In here, it is appreciated that since each of diamond tools 10 and 20 for cutting saw and core drilling machines has same structure except that wheel bodies 11 and 21 have respectively disk and cylinder shapes, only diamond tool or blade 10 for cutting saw machine will be explained.

Diamond blade 10 for cutting saw machine comprises wheel body 11 connected with a shaft of electric motor having a plurality of discharge slots 13 for receiving and discharging minute chips produced during cutting operation, and segment type cutting tip for cutting and grinding crushable materials disposed circumferentially on the wheel body 11 between discharge slots 13.

Segment type cutting tip comprises a plurality of diamond layer segments 12 disposed at predetermined intervals on the circumference of wheel body 11.

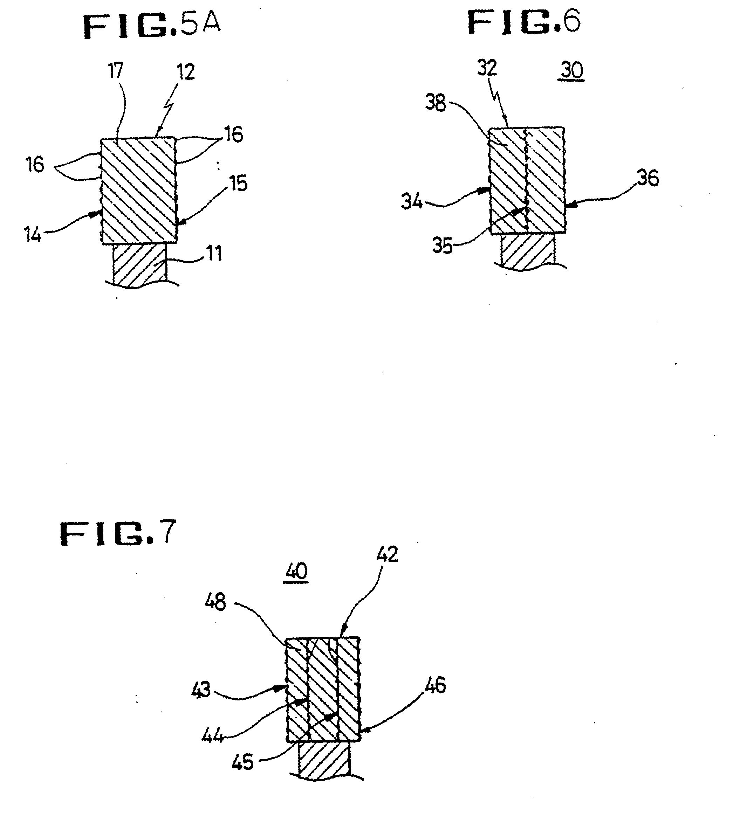

Each of diamond layer segments 12 is composed of two thin diamond layers 14 and 15 longitudinally disposed respectively in inner and outer surfaces thereof parallel with the rotation direction of the blade 10, and non-diamond portion 17 disposed between two diamond layers 14 and 15 as shown in FIG.5A and 5B.

Thin diamond layers 14 and 15 are composed of particles of diamond and grinding material, particles of metals composing of cobalt, nickel, bronze, copper, etc., and particles of resin or ceramic.

Particles 16 of diamond in thin diamond layers 14 and 15 are randomly distributed therein, or in a given pattern or arrangement such a single or double layer figure with grid shaped spots to reduce the amount of diamond particles used.

Non-diamond portion 17 is composed of grinding materials, metals such as cobalt, nickel, bronze, copper, etc., and resin or ceramic.

Thin diamond layers 14 and 15 function to prevent edge area of upper surface of each diamond layer segment 12 defacing and to form two microscopic linear cutting grooves 18 and 18" in the crushable materials 19 during cutting operation, as shown in FIG.5B.

Thus, portions 18' of crushable materials 19 between two cutting grooves 18 and 18" can be easily crushed by small friction and rotation impact power of non-diamond portion 17 and thereby non-diamond portion 17 of diamond layer segments 12 are able to produce cutting chips with relative large size during cutting operation so that those chips are easily discharged outside with reducing the friction with diamond layer segments 12 of blade 10, thereby to increase cutting ability and to prevent chips dispersing in the air.

In this embodiment of the present invention, It is noted that each of diamond layer segments 12 can be substituted by segments 32 or 42 composed of three or four thin diamond layers 34, 35, and 36, or 43, 44, 45, and 46 longitudinally disposed therein parallel with the rotation direction of blade 30 or 40 respectively to form three or four microscopic linear cutting grooves in the crushable materials during cutting operation, and non-diamond portions 38 or 48 disposed between the three or four diamond layers 34, 35,and 36, or 43, 44, 45, and 46 as shown in FIG.6 and 7.

In this case, portions of crushable materials between the microscopic linear cutting grooves can be easily crushed by friction and rotation impact power smaller than that of diamond layer segment 12 having two thin diamond layers 14 and 15.

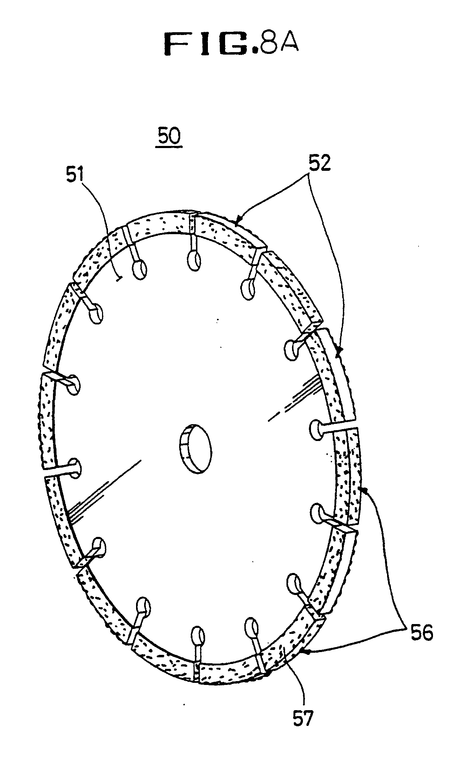

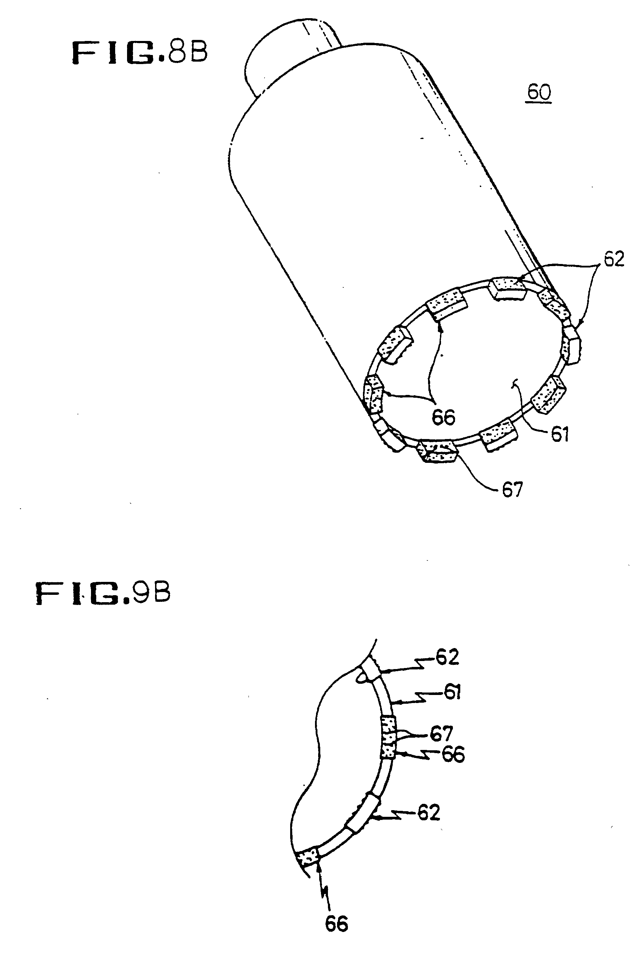

Also, segment type cutting tip can further include a plurality of non-diamond layer segments 56 or 66, each of which diamond particles 57 or 67 are randomly distributed in the inside and surfaces thereof, as shown in FIG.8A and 8B.

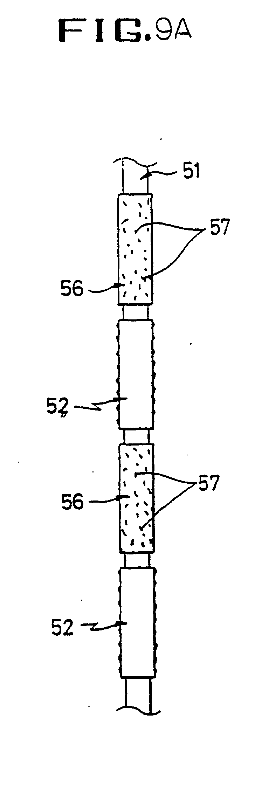

Non-diamond layer segments and diamond layer segments 56 and 52, or 66 and 62 are alternatively disposed on the circumference of wheel body 51 or 61 of tool 50 or 60, as shown in FIG.9A and 9B.

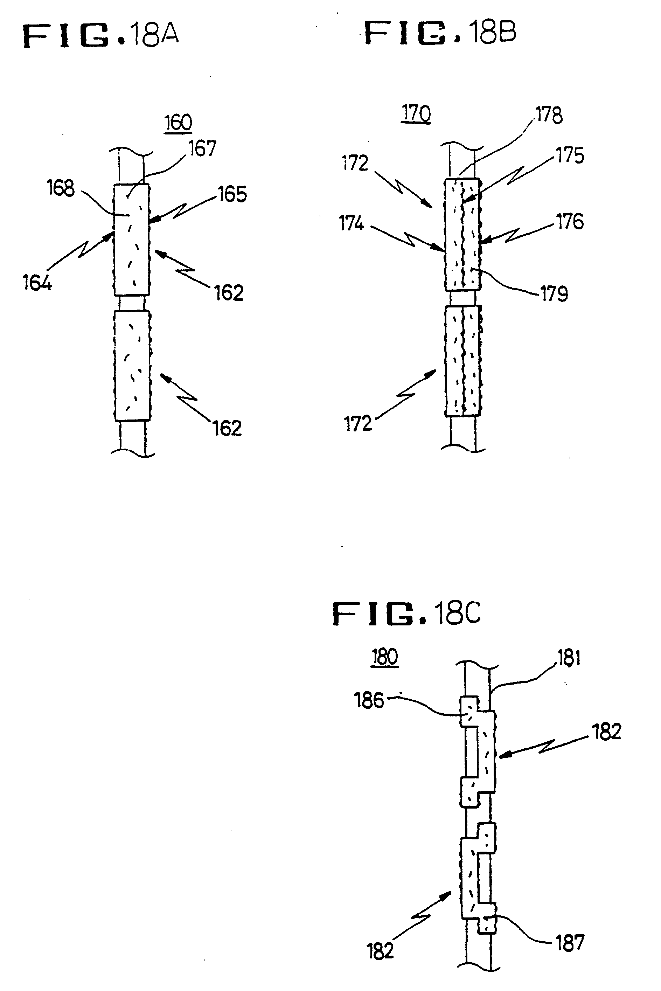

Also, as in the non-diamond portion 168 or 178 of blade 160 or 170 shown in FIG. 18A and 18B, diamond particles 167 or 179 can be distributed in the density lower than that of diamond layers 164 and 165, or 174,175 and 176 of each diamond layer segment 162 or 172 or above noted non-diamond layer segments 56 or 66.

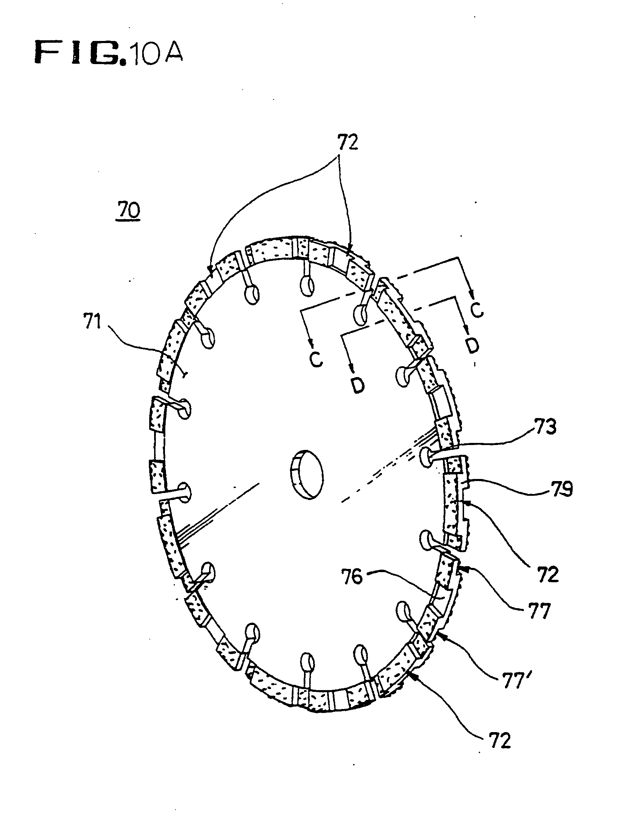

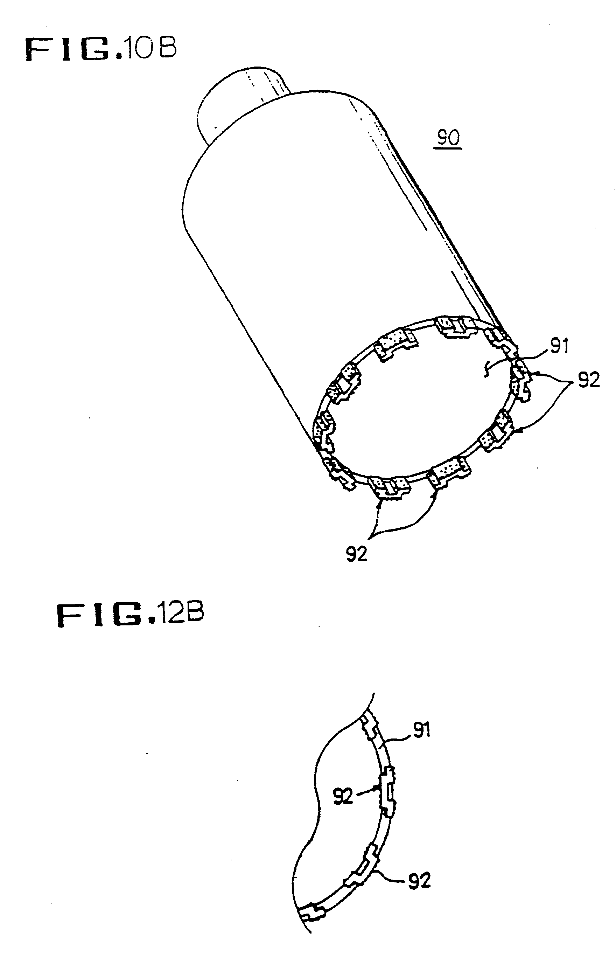

Referring to FIG.10A and 10B, there are illustrated diamond tools 70 and 90 according to another preferred embodiment of the present invention for use in apparatus for cutting and drilling crushable materials such as cutting saw machine and core drilling machine.

In here, it is also appreciated that since each of diamond tools 70 and 90 for cutting saw machine and core drilling machine has same structure except that wheel bodies 71 and 91 have respectively disk and cylinder shapes, only diamond tool or blade 70 for cutting saw machine will be explained.

Diamond blade 70 for cutting saw machine comprises wheel body 71 connected with a shaft of electric motor having a plurality of discharge slots 73 for receiving and discharging minute chips produced during cutting operation, and segment type cutting tip for cutting and grinding crushable materials.

Cutting tip comprises a plurality of diamond layer segments 72 disposed at predetermined intervals on the circumference of wheel body 71, each of diamond layer segments 72 which includes non-diamond portion 79 having a depressed portion 76 disposed in the center of inner surface thereof and cutting portions 77 and 77' disposed in both edges of outer surface thereof.

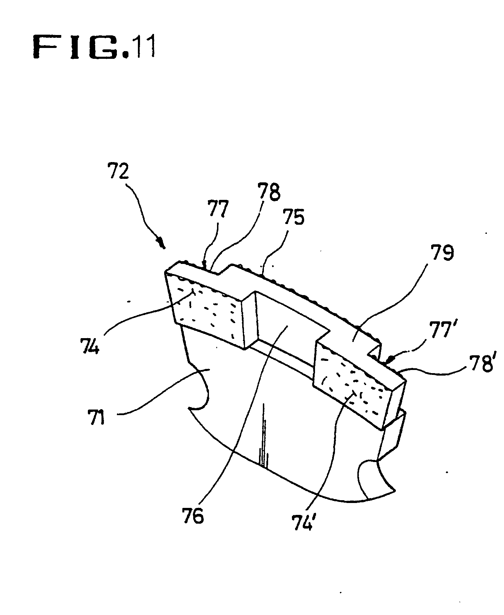

Also, each of. diamond layer segments 72 further includes a plurality of diamond layers 78, 78', 74, 74' and 75 longitudinally disposed parallel with the rotation direction of the blade respectively on bottom surfaces of cutting portions 77 and 77' of non-diamond portion 79 and inner and outer surfaces of non-diamond portion 79 divided or reduced by depressed portion 76 and cutting portions 77 and 77', as shown in FIG. 11.

It is desirable that the area of diamond layers 74 and 74' on inner surface of non-diamond portion 79 of diamond layer segments 72 is same as that of diamond layer 75 on outer surface of non-diamond portion 79 to keep the balance of cutting ability of both diamond layers 74, 74' and 75.

Bottom surfaces of cutting portions 77 and 77' of non-diamond portion 79 are positioned about the plane forming the center between inner surface and outer surface of non-diamond portion 79 of diamond layer segments 72 to let diamond layers 78 and 78' disposed thereon to form one microscopic linear cutting groove 82 in crushable materials 85 during the cutting operation of blade 70, as shown in FIG.11, 12A, 12B and 13.

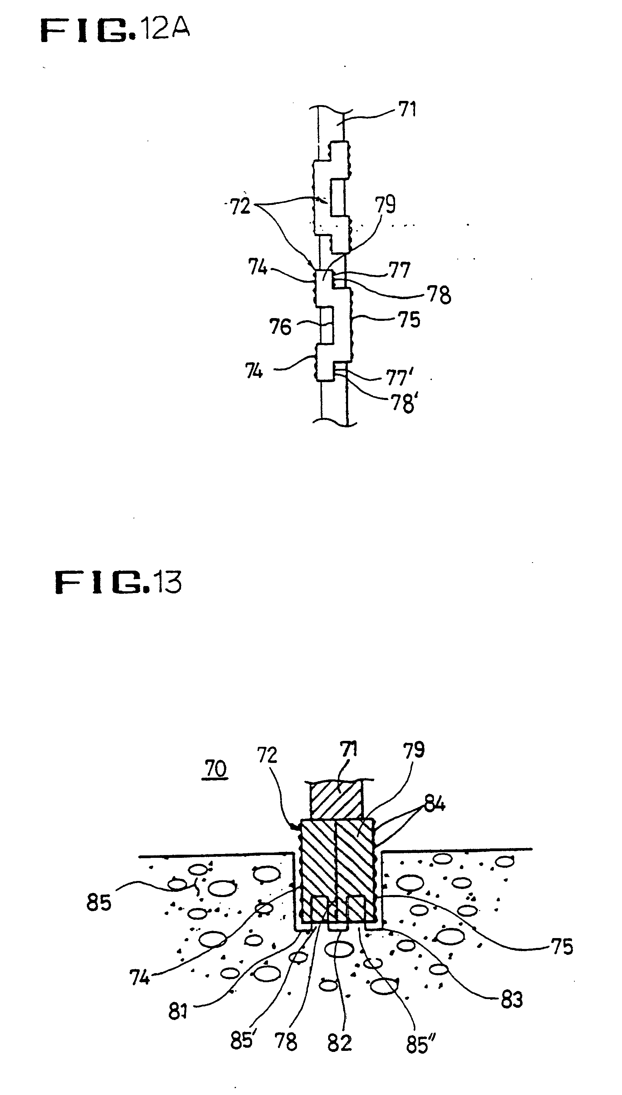

Thus, diamond layers 78, 78' 74, 74' and 75 on bottom surfaces of cutting portions 77 and 77' of non-diamond portion 79 and inner and outer surfaces of non-diamond portion 79 of diamond layer segments 72 form three microscopic linear cutting grooves 81, 82, and 83 in crushable materials 85 to let portions 85' and 85" of crushable materials 85 between the microscopic linear cutting grooves 81, 82, and 83 to be easily crushed by small friction and rotation impact power of non-diamond portion 79 during the cutting operation of blade 70, as shown in FIG.13.

Diamond layer segments 72 or 92 are disposed on the circumference of wheel body 71 or 91 so that depressed portion 76 and cutting portions 77 and 77' thereof are alternatively directed to the inside or outside, as shown in FIG. 12A and 12B.

Also, as in non-diamond portion 186 of each diamond layer segment 182 of blade 180 shown in FIG. 18C, diamond particles 187 can be distributed in the density lower than that of diamond layers of diamond layer segments 182.

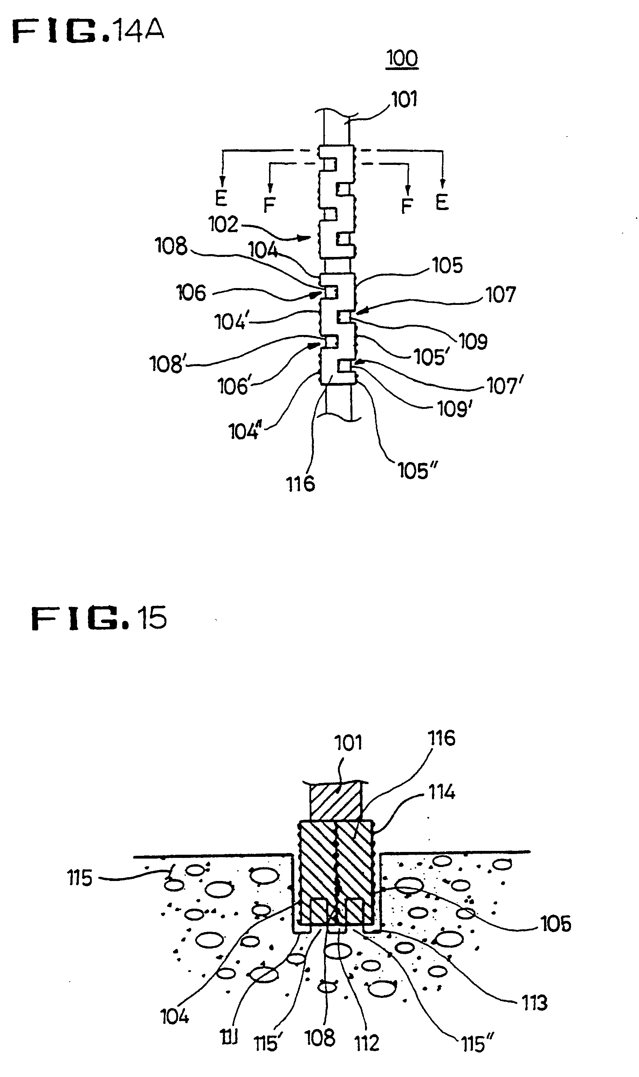

In other embodiment of the present invention, diamond tools 100 and 120 for use in apparatus such as cutting saw machine and core drilling machine includes respectively segment type cutting tip for cutting and drilling crushable materials comprising a plurality of diamond layer segments 102 or 122 disposed at predetermined intervals on the circumference of wheel body 101 or 121, as shown in FIG. 14A and 14B.

It is also appreciated that since each of diamond layer segments 102 and 122 for cutting saw machine and core drilling machine has same structure, only diamond layer segments 102 for cutting saw machine will be explained.

Each of diamond layer segments 102 comprises non-diamond portion 116 having four inner and outer depressed portions 106, 106', 107, and 107' in inner and outer surfaces thereof, and a plurality of diamond layers 108, 108', 109, 109', 104, 104', 104", 105, 105', and 105" longitudinally disposed parallel with the rotation direction of the blade 100 respectively on bottom surfaces of depressed portions 106, 106', 107, and 107'of non-diamond portion 116 and inner and outer surfaces of non-diamond portion 116 of diamond layer segments 102 divided by depressed portions 106, 106', 107, and 107' of non-diamond portion 116, as shown in FIG. 14A.

Four inner and outer depressed portions 106, 106', 107, and 107' are disposed to cross each other at predetermined intervals in inner and outer surfaces of non-diamond portion 116 of diamond layer segments 102.

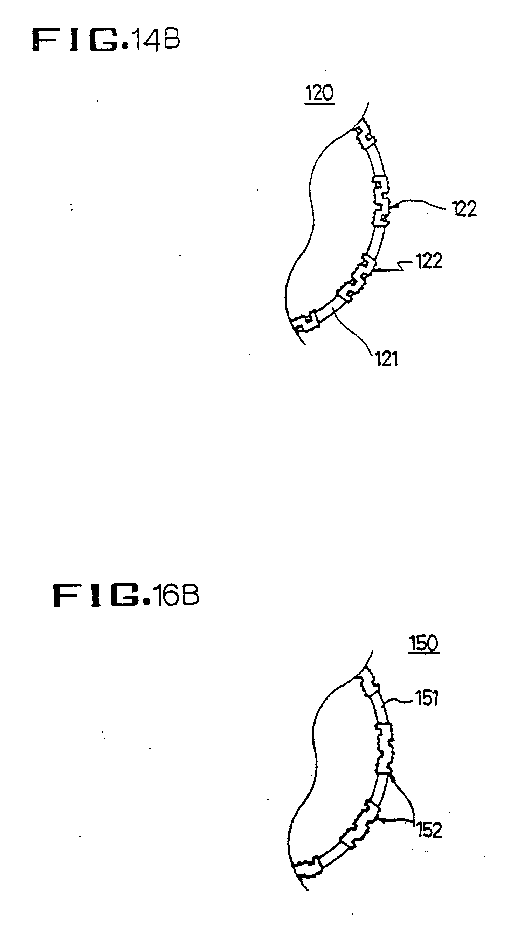

It is desirable that the depth of all bottom surfaces of depressed portions 106, 106', 107, and 107' of non-diamond portion 116 is a half of the thickness of non-diamond portion 116 of diamond layer segment 102 to let diamond layers 108, 108', 109, and 109' disposed thereon to form one microscopic linear cutting groove 112 in crushable materials 115 during the cutting operation of blade 100, as shown in FIG.15.

Thus, a plurality of diamond layers 104, 104', 104", 105, 105', 105", 108, 108' 109, and 109' on inner and outer surfaces of non-diamond portion 116 of diamond layer segments 102 and bottom surfaces of depressed portions 106, 106', 107, and 107' thereof form three microscopic linear cutting grooves 111, 112, and 113 in crushable materials 115 to let portions 115' and 115" of crushable materials 115 between the microscopic linear cutting grooves 111, 112, and 113 to be easily crushed by small friction and rotation impact power of non-diamond portions 116 during the cutting operation of blade 100, as shown in FIG.15.

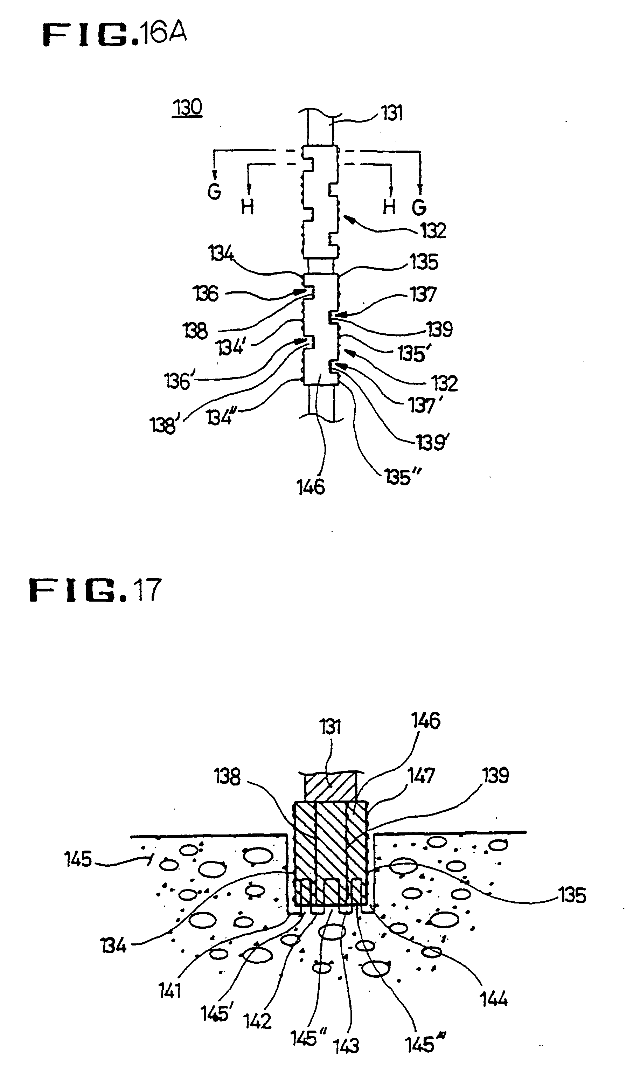

Also, the depth of bottom surfaces of depressed portions 136, 136', 137, and 137' of each inner and outer surface of non-diamond portion 146 can be less than a half of the thickness of non-diamond portion 146 of diamond layer segment 132 to let diamond layers 138, 138' 139, and 139' disposed thereon to form two microscopic linear cutting grooves 142 and 143 in crushable materials 145 during the cutting operation of tool 130 or 150, as shown in FIG.16A, 16B and 17.

Thus, in this case, diamond layers 134, 134', 134", 135, 135' 135", 138, 138', 139, and 139' on inner and outer surfaces of non-diamond portion 146 of each diamond layer segment 132 and bottom surfaces of depressed portions 136, 136', 137, and 137' thereof form four microscopic linear cutting grooves 141, 142, 143, and 144 in crushable materials 145 to let portions 145',145", and 145"' of crushable materials 145 between the cutting grooves 141, 142, 143, and 144 to be easily crushed by small friction and rotation impact power of non-diamond portions 146 during the cutting operation of blade 130, as shown in FIG.17.

Operation of diamond tools for use in apparatus such as cutting saw machine and core drilling machine according to embodiments of the present invention will de described, hereinafter.

Referring to FIG.5B, there is illustrated the operation of a diamond blade 10 of one embodiment of the present invention which two thin diamond layers 14 and 15 are longitudinally disposed respectively in inner and outer surfaces of non-diamond portion 17 of diamond layer segments 12.

At first, when wheel body 11 is rotated by an electric motor connected with a shaft thereof to cut crushable materials 19 such as brick, concrete, granite, marble, etc., diamond layer segments 12 begin to grind crushable materials 19 to form a cutting slot therein along a predetermined line.

At this time, since thin diamond layers 14 and 15 including particles 16 of diamond are disposed in inner and outer surfaces of each diamond layer segment 12, both edges of each diamond layer segment 12 are defaced less than center thereof and thereby two microscopic linear cutting grooves 18 and 18" are formed in the cutting slot of crushable materials 19, as shown in FIG. 5B.

By forming cutting grooves 18 and 18", portion 18' of crushable materials 19 therebetween is weakened and easily crushed by small friction and rotation impact power of non-diamond portion 17.

Thus, non-diamond portion 17 of diamond layer segment 12 are able to produce cutting chips with relative large size and produced chips are easily discharged outside through discharge slots 13 of wheel body 11 with reducing the friction with diamond layer segment 12 of blade 10, thereby to increase cutting ability and to prevent chips dispersing in the air.

In this way, by repeating operations of each diamond layer segment 12 of diamond blade 10, cutting crushable materials 19 along the predetermined line is completed.

Referring to FIG.13, 15 and 17, there are illustrated the operation of diamond blades 70, 100, and 130 of other embodiments of the present invention.

The operation of these diamond blades 70, 100 and 130 is same that of the diamond blade 10 of embodiment noted above expect that diamond layers on inner and outer surfaces of non-diamond portion and cutting portions or depressed portions form three or four linear cutting grooves in crushable materials.

As apparent from the foregoing description, the present invention provides a diamond tool having segment type cutting tip comprising a plurality of diamond layer segments, each of which at least two diamond layers are longitudinally disposed along the rotation direction of the tool to form microscopic cutting grooves in the crushable materials during cutting operation and thereby to cause portions of crushable materials between the cutting grooves to be easily crushed by non-diamond portions of diamond layer segments to enhance cutting ability of the tool.

Also, the present invention provides a diamond tool having a structure which segment type cutting tip is able to produce cutting chips with relative large size during cutting operation so that those chip are easily discharged outside to reduce the friction with diamond layer segments of tool, thereby to increase cutting ability and to prevent produces chips dispersing in the air and giving rise to the bad effects to user's health and the contamination of environment.

Also, the present invention provides a diamond tool having segment type cutting tip comprising a plurality of diamond layer segments, each of which diamond particles in diamond layer thereof are distributed in a given pattern to reduce the amount of diamond particles used and thereby reduce the manufacturing cost of tool.

## Claims

1. A diamond tool (10) having segmented cutting tips for cutting, grinding or drilling workpieces comprising
a wheel body (11); and comprising at least
a plurality of diamond layer segments (12, 32, 42, 52, 62) disposed at a periphery of the wheel body (11), each diamond layer segment (12, 32, 42, 52, 62) including :
diamond layers (14, 15; 34, 35, 36; 43, 44, 45, 46), comprising diamond particles (16), which are disposed on side surfaces parallel with the rotation direction of the wheel body (11), to form microscopic cutting grooves (18, 18") within the workpieces (19) during cutting, grinding or drilling operation;
wherein and a non-diamond portion (17, 38, 48) is disposed between the diamond layers (14, 15; 34, 35, 36; 43, 44, 45, 46) **characterized in that** said non-diamond portion (17, 38, 48) is suitable to crush portions (18') of the workpieces (19) between the microscopic cutting grooves (18, 18") with a relatively larger size as the non-diamond portion (17, 38, 48) applies a relatively small friction and a rotation impact to the portion (18') of the workpieces wherein the non-diamond portion comprises grinding materials and does not include diamond particles (16).

2. The diamond tool (70) according to claim 1 wherein said non-diamond portion (79) has a depressed portion (76) depressed from one side surface thereof, and cutting portions (77, 77') depressed from other side surface thereof and wherein the bottom surface of the depressed portion (76) and the depressed cutting portions (77, 77') are formed to be alternatively aligned on each side surface of the non-diamond portion (79), said diamond layers (74, 74', 78, 78', 75) being disposed on said one side surface, on said cutting portions (77, 77') and on said other side surface;

3. The diamond tool (100; 130), according to claim 1 wherein said non-diamond portion (116; 146) has a plurality of first depressed portions (106, 106'; 136, 136') depressed from one side surface thereof and a plurality of second depressed portions (107, 107'; 137, 137') depressed from other side surface thereof, the first depressed portions (106, 106'; 136, 136') and the second depressed portions (107, 107'; 137, 137') being formed to be alternatively aligned on each side surface of the non diamond portion (116; 146) and said diamond layers (108, 108', 109, 109', 104, 104', 104", 105, 105', 105"; 138, 138', 139, 139', 134, 134', 134", 135, 135', 135") being disposed on the one side, the other side surfaces, the bottom surface of the first depressed portions (106, 106'; 136, 136') from the one side surface, and on the bottom surface of the second depressed portions (107, 107'; 137, 137') from the other side surface; and
wherein all directions of said surfaces are parallel with the rotation direction of the wheel body (101; 131).

4. The diamond tool as claimed in claim 3, wherein the depth of said depressed portions is a half of the thickness of said non-diamond portion (116).

5. The diamond tool as claimed in claim 3, wherein the depth of said bottom surfaces is less than a half of the thickness of said non-diamond portion (146).

6. The diamond tool. as claimed in any claim 1 to 5, wherein the diamond particles are distributed in each diamond layer forming a pattern of grid.

## Patentansprüche

1. Diamantwerkzeug (10) mit segmentierten Schneidplättchen zum Schneiden, Schleifen oder Bohren von Werkstücken, mit
einem Radkörper (11); und mit zumindest
mehreren Diamantschichtsegmenten (12, 32, 42, 52, 62), die an einem Umfang des Radkörpers (11) angeordnet sind, wobei jedes Diamantschichtsegment (12, 32, 42, 52, 62) folgendes umfasst:
Diamantschichten (14, 15; 34, 35, 36; 43, 44, 45, 46) mit Diamantpartikeln (16), die an Seitenflächen parallel zur Drehrichtung des Radkörpers (11) angeordnet sind, um während eines Schneid-, Schleif- oder Bohrvorganges mikroskopische Schneidrillen (18, 18") in den Werkstücken (19) zu bilden;
wobei ein diamantfreier Abschnitt (17, 38, 48) zwischen den Diamantschichten (14, 15; 34, 35, 36; 43, 44, 45, 46) angeordnet ist,
**dadurch gekennzeichnet, dass**
der diamantfreie Abschnitt (17, 38, 48) dazu geeignet ist, Abschnitte (18') der Werkstücke (19) zwischen den mikroskopischen Schneidrillen (18, 18") von verhältnismäßig großer Größe zu zerkleinern, wenn der diamantfreie Abschnitt (17, 38, 48) den Abschnitt (18') der Werkstücke mit relativ geringer Reibung und mit Drehschlägen beaufschlagt, wobei der diamantfreie Abschnitt Schleifstoffe umfasst und keine Diamantpartikel (16) aufweist.

2. Diamantwerkzeug (70) nach Anspruch 1,
bei dem der diamantfreie Abschnitt (79) einen zurückgesetzten Abschnitt (76) hat, der von einer seiner Seitenflächen zurückgesetzt ist, und Schneidabschnitte (77, 77'), die von seiner anderen Seitenfläche zurückgesetzt sind, und bei dem die Grundfläche des zurückgesetzten Abschnitts (76) und die zurückgesetzten Schneidabschnitte (77, 77') so gebildet sind, dass sie abwechselnd an jeder Seitenfläche des diamantfreien Abschnitts (79) aufgereiht sind, wobei Diamantschichten (74, 74', 78, 78', 75) an der einen Seitenfläche, auf den Schneidabschnitten (77, 77') an der anderen Seitenfläche angeordnet sind.

3. Diamantwerkzeug (100; 130) nach Anspruch 1,
bei dem der diamantfreie Abschnitt (116; 146) mehrere erste zurückgesetzte Abschnitte (106, 106'; 136, 136') hat, die von einer seiner Seitenflächen zurückgesetzt sind, und mehrere zweite zurückgesetzte Abschnitte (107, 107'; 137, 137'), die von seiner anderen Seitenfläche zurückgesetzt sind, wobei die ersten zurückgesetzten Abschnitte (106, 106'; 136, 136') und die zweiten zurückgesetzten Abschnitte (107, 107'; 137, 137') so gebildet sind, dass sie abwechselnd an jeder Seitenfläche des diamantfreien Abschnitts (116; 146) aufgereiht sind und die Diamantschichten (108, 108', 109, 109', 104, 104', 104", 105, 105', 105"; 138, 138', 139, 139', 134, 134', 134", 135, 135', 135") an der einen Seitenfläche und an den anderen Seitenflächen, an der Grundfläche der ersten zurückgesetzten Abschnitte (106, 106'; 136, 136') von der einen Seitenfläche her und an der Grundfläche der zweiten zurückgesetzten Abschnitte (107, 107'; 137, 137') von der anderen Seitenfläche her angeordnet sind; und
bei dem alle Richtungen dieser Oberflächen parallel zur Drehrichtung des Radkörpers (101; 131) liegen.

4. Diamantwerkzeug nach Anspruch 3,
bei dem die Tiefe der zurückgesetzten Abschnitte die Hälfte der Dicke des diamantfreien Abschnitts (116) beträgt.

5. Diamantwerkzeug nach Anspruch 3,
bei dem die Tiefe der Grundflächen weniger als die Hälfte der Dicke des diamantfreien Abschnitts (146) beträgt.

6. Diamantwerkzeug nach einem der Ansprüche 1 bis 5,
bei dem die Diamantpartikel in jeder Diamantschicht unter Bildung einer Gitterstruktur verteilt sind.

## Revendications

1. Outil diamanté (10) ayant des extrémités de coupe segmentées pour la coupe, le meulage ou le perçage de pièces, comprenant
un corps de roue (11), et comprenant au moins
une série de segments à couches de diamant (12, 32, 42, 52, 62) placés à la périphérie du corps de roue (11), chaque segment à couches de diamant (12, 32, 42, 52, 62) comportant :
des couches de diamant (14, 15 ; 34, 35, 36; 43, 44, 45, 46), comprenant des particules de diamant (16), qui sont placées sur des surfaces latérales parallèles à la direction de rotation du corps de roue (11), pour former de microscopiques sillons de coupe (18, 18") dans les pièces (19) pendant l'opération de coupe, meulage ou perçage,
dans lequel une partie non diamantée (17, 38, 48) est placée entre les couches de diamant (14, 15 ; 34, 35, 36 ; 43, 44, 45, 46),
**caractérisé par le fait que** la partie non diamantée (17, 38, 48) est apte à écraser des parties (18') des pièces (19) entre les microscopiques sillons de coupe (18, 18") avec une dimension relativement plus grande lorsque la partie non diamantée (17, 38, 48) applique un frottement relativement faible et un choc de rotation à la partie (18') des pièces, dans lequel la partie non diamantée comprend des matières abrasives et ne contient pas de particules de diamant (16).

2. Outil diamanté (70) selon la revendication 1, dans lequel la partie non diamantée (79) a une partie en dépression (76) en dépression par rapport à une surface latérale de celle-ci et des parties coupantes (77, 77') en dépression par rapport à l'autre surface latérale de celle-ci, et dans lequel la surface de fond de la partie en dépression (76) et les parties coupantes en dépression (77, 77') sont formées de façon à être alignées alternativement sur chaque surface latérale de la partie non diamantée (79), les couches de diamant (74, 74', 78, 78', 75) étant placées sur ladite surface latérale, sur les parties coupantes (77, 77') et sur ladite autre surface latérale.

3. Outil diamanté (100 ; 130) selon la revendication 1, dans lequel la partie non diamantée (116; 146) a une série de premières parties en dépression (106, 106' ; 136, 136') en dépression par rapport à une surface latérale de celle-ci et une série de deuxièmes parties en dépression (107, 107' ; 137, 137') en dépression par rapport à l'autre surface latérale de celle-ci, les premières parties en dépression (106, 106' ; 136, 136') et les deuxièmes parties en dépression (107, 107' ; 137, 137') étant formées de façon à être alignées alternativement sur chaque surface latérale de la partie non diamantée (116 ; 146) et les couches de diamant (108, 108', 109, 109', 104, 104', 104", 105, 105', 105" ; 138, 138', 139, 139', 134, 134', 134", 135, 135', 135") étant placées sur ladite surface latérale, ladite autre surface latérale, la surface de fond des premières parties en dépression (106, 106' ; 136, 136') par rapport à ladite surface latérale, et sur la surface de fond des deuxièmes parties en dépression (107, 107' ; 137, 137') par rapport à ladite autre surface latérale, et
dans lequel toutes les directions desdites surfaces sont parallèles à la direction de rotation du corps de roue (101 ; 131).

4. Outil diamanté selon la revendication 3, dans lequel la profondeur des parties en dépression est égale à la moitié de l'épaisseur de la partie non diamantée (116).

5. Outil diamanté selon la revendication 3, dans lequel la profondeur des surfaces de fond est égale à la moitié de l'épaisseur de la partie non diamantée (146)

6. Outil diamanté selon l'une des revendications 1 à 5, dans lequel les particules de diamant sont réparties dans chaque couche de diamant de manière à former un quadrillage.
